# EUROPÄISCHE PATENTSCHRIFT

(11) **EP 1 385 728 B1**
(45) Veröffentlichungstag und Bekanntmachung des Hinweises auf die Patenterteilung: **29.03.2006**
(21) Anmeldenummer: 02747295.0
(22) Anmeldetag: 26.04.2002
(51) Int. Cl.: B60T 13/68

(54) **VORGESTEUERTES VENTIL MIT EINEM DRUCKAUSGLEICHSKANAL**
PILOTED VALVE COMPRISING A PRESSURE COMPENSATION CHANNEL
SOUPAPE PILOTEE A CANAL DE COMPENSATION DE PRESSION

(30) Priorität: 26.04.2001 DE 10120319
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: ROETHER, Friedbert, 74389 Cleebronn (DE); DEJA, Siegmund, 71691 Freiberg (DE); SCHAFFERT, Eberhard, 71229 Leonberg (DE)
(86) Internationale Anmeldenummer: PCT/EP2002/004629
(87) Internationale Veröffentlichungsnummer: WO 2002/087948

(56) Entgegenhaltungen:
- EP-A- 1 022 204
- DE-A- 19 605 562
- PATENT ABSTRACTS OF JAPAN vol. 2000, no. 09, 13. Oktober 2000 (2000-10-13) & JP 2000 168529 A (NISSIN KOGYO CO LTD), 20. Juni 2000 (2000-06-20)

## Beschreibung

Die Erfindung betrifft ein vorgesteuertes Ventil, insbesondere ein elektropneumatisches Regelventil für ein Druckluftbremssystem eines Fahrzeuges, mit einem geteilten Ventilgehäuse, in dem mindestens ein axial verstellbarer Steuerkolben zur Betätigung einer den Druckfluss zwischen äußeren Anschlüssen schaltenden Ventilsitzanordnung angeordnet ist, wobei der Steuerkolben über mindestens ein elektromagnetisches Vorsteuerventil zur Axialverstellung beaufschlagbar ist, welches in einem mit dem Relaisventilgehäuseteil verbundenen Vorsteuerventilgehäuseteil untergebracht ist. Insbesondere betrifft die vorliegende Erfindung eine spezielle Ausgestaltung eines ventilinternen Druckausgleichskanals.

Besonders innerhalb eines Druckluftbremssystems eines Fahrzeuges kommt ein gattungsgemäßes vorgesteuertes Ventil zum Einsatz, das speziell in diesem Falle als elektropneumatisches Regelventil ausgebildet ist. Das Regelventil hat die Aufgabe, entsprechend der gewünschten Bremswirkung einen Bremsdruck auszuregeln. Eine vom Regelventil ausgehende Bremsleitung steht zu diesem Zwecke gewöhnlich mit einem direkt am Fahrzeugrad angeordneten Bremszylinder in Verbindung, der zum Bremsen des Fahrzeugrades mittels einer hieran angeschlossenen Scheiben- oder Trommelbremse die benötigte Bremskraft erzeugt. Die Vorgabe des Druck-Sollwertes für das elektropneumatische Regelventil erfolgt in erster Linie elektrisch. Daneben wird aus Sicherheitsgründen meist eine parallele pneumatische Ansteuerung vorgesehen, die im Falle eines Ausfalls der elektrischen Ansteuerung genutzt wird.

Ein derartiges elektropneumatisches Regelventil ist aus der JP2000-168529 und der DE 196 05 562 A1 bekannt. Das Regelventil weist einen axial innerhalb eines zylindrischen Hohlraumes des Ventilgehäuses untergebrachten großflächigen Steuerkolben auf. Der Steuerkolben trennt den Hohlraum dabei in eine Steuerkammer sowie eine Arbeitskammer. Seitens der Arbeitskammer ist am Steuerkolben ein koaxialer Hohlzapfen ausgebildet, der zur Betätigung einer benachbarten Ventilsitzanordnung dient. Die Ventilsitzanordnung schaltet durch eine axiale Verstellung eines federverspannten Ventilrohres den Druckluftfluss zwischen einem außenliegenden Bremsleitungsanschluss, einem Speisedruckanschluss sowie einem Entlüftungsanschluss.

Der Steuerkolben ist seitens der Steuerkammer mit einem Steuerdruck beaufschlagbar, der über eine Vorsteuerventilanordnung erzeugt wird. Die Vorsteuerventilanordnung besteht hier aus zwei elektromagnetischen Vorsteuerventilen, die durch eine koordinierte Bestromung der integrierten elektrischen Spulen ein Ansteigen, Halten oder Absenken des Steuerdrucks innerhalb der Steuerkammer bewirken. Auf der gegenüberliegenden Seite des Steuerkolbens liegt eine aus dem Bremsdruck resultierende Kraft an.

Das Ventilgehäuse kann in zwei Hauptbestandteile aufgegliedert werden, wobei in einem unteren Relaisventilgehäuseteil im Wesentlichen die Ventilsitzanordnung mit den äußeren Anschlüssen vorgesehen ist und in einem oberen Vorsteuerventilgehäuseteil die Vorsteuerventile untergebracht sind. Die Hohlräume innerhalb des Ventilgehäuses werden teilweise als Druckkammern zur Ausübung der Ventilfunktion genutzt; teilweise sind jedoch auch drucklose ventilinterne Hohlräume vorgesehen, beispielsweise zur Unterbringung der Elektronikeinheit für die Ansteuerung der Vorsteuerventile. Es ist hierbei erforderlich, dass die Elektronikeinheit frei von Über- oder Unterdruckeinflüssen ist.

Zu diesem Zweck ist es allgemein bekannt, einen entsprechenden Druckausgleichskanal vorzusehen, der eine Verbindung zwischen dem ventilinternen Hohlraum und der Atmosphäre herstellt. Gewöhnlich ist ein Regelventil für ein Druckluftbremssystem eines Fahrzeuges oder vergleichbare Ventile von äußeren Umwelteinflüssen ungeschützt am Fahrzeug oder dergleichen angebracht. Damit durch den Druckausgleichskanal keine äußeren Umwelteinflüsse - wie Regenwasser - in den ventilinternen Hohlraum gelangen kann, ist bereits versucht worden, die Austrittsöffnung des Druckausgleichskanals an einer geschützten Stelle aus dem Ventilgehäuse austreten zu lassen. Es hat sich jedoch gezeigt, dass diese Lösung den gewünschten Dichtheitseffekt nicht zuverlässig sicherstellt. So kann beispielsweise bei einer Reinigung des Ventils mittels eines Dampfstrahlers noch Reinigungswasser in das Innere des Ventils gelangen.

Um dieses Problem zu lösen wurde ebenfalls versucht, den Entlüftungskanal vom Hohlraum direkt zum Entlüftungsanschluss zu führen, der gewöhnlich mit einem zusätzlichen Schalldämpfer versehen ist, welcher den gewünschten Schutz bietet. Ein zusätzlicher Schutz vor dem Eindringen von äußeren Umwelteinflüssen wird im Stand der Technik dadurch erzielt, dass ein Druckausgleichselement in den Druckausgleichskanal platziert wird. Das Druckausgleichselement ermöglicht einen beidseitigen Luftaustausch durch eine porige Mikrostruktur und vermeidet gleichzeitig einen Wassereintritt in Richtung des Hohlraums.

Auch diese bekannte Maßnahme führt zu nur unbefriedigenden Ergebnissen. Der im Bereich des Entlüftungsanschlusses des Ventils ausmündende Druckausgleichskanal führt durch eine Rückwirkung des bei der Entlüftung des Ventils hier herrschenden Drucks zu einer unerwünschten Drucküberhöhung im Elektronikraum.

Es ist daher die Aufgabe der vorliegenden Erfindung, ein vorstehend beschriebenes vorgesteuertes Ventil dahingehend weiter zu verbessern, dass ein wirksamer Druckausgleich eines ventilinternen Hohlraums mit einfachen Mitteln erzielt wird.

Die Aufgabe wird ausgehend von einem vorgesteuerten Ventil gemäß des Oberbegriffs des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zur Entlüftung eines drucklosen ventilinternen Hohlraums ein im Bereich der Wandung der Steuerkammer im Ventilgehäuse eingebrachter mehrfach abgewinkelter Druckausgleichskanal vorgesehen ist, dessen nach außen führende Austrittsöffnung hinter einer beabstandeten Abdeckhaube am Ventilgehäuse spritzwassergeschützt angeordnet ist und dessen hohlraumnaher Kanalabschnitt mit einem austauschbaren Druckausgleichselement versehen ist.

Der Vorteil dieser speziellen Kanalausbildung liegt insbesondere darin, dass der Druckausgleich nunmehr in einem Gehäusebereich des Ventils nach außen erfolgt, der durch die zu einem anderen Zwecke vorgesehene Abdeckhaube schon relativ geschützt gegen ein Eindringen von Spritzwasser und Schmutz angeordnet ist. Die abgewickelte Ausgestaltung des Druckausgleichskanals stellt eine weitere wirkungsvolle Schutzmaßnahme dar. Erst im hohlraumnahen Bereich des Druckausgleichskanals ist ein Druckausgleichselement eingebracht, das wegen der äußeren Zugänglichkeit leicht montierbar oder austauschbar ist. Zum Anschluss einer innerhalb des als Elektronikraum ausgebildeten Hohlraums untergebrachten Elektronikeinheit kann am Ventilgehäuse eine entsprechende elektrische Steckanordnung angeordnet sein, die zum Schutz vor äußeren Umwelteinflüssen mit der Abdeckhaube versehen ist. Vorzugsweise dient die Abdeckhaube gleichzeitig auch dem Schutz der Austrittsöffnung des Druckausgleichskanals, die insoweit ebenfalls hinter dieser Abdeckhaube platziert ist. Die spezielle Abfolge dieser konstruktiven Maßnahmen schaffen einen geschützten und wirksamen Druckausgleich.

Gewöhnlich ist das Ventilgehäuse des vorgesteuerten Ventils durch Gießen hergestellt. Der ventilinterne Druckausgleichskanal kann vorteilhafterweise direkt beim Gießen in das Ventilgehäuse eingebracht werden. Darüber hinaus ist es auch denkbar, den Druckausgleichskanal nach der Herstellung des Ventilgehäuses durch Bohren oder dergleichen einzubringen.

Bei einer Ausbildung des vorgesteuerten Ventils als elektropneumatisches Regelventil für ein Druckluftsystem eines Fahrzeuges ist das Ventilgehäuse vorzugsweise aus einem separaten Relaisventilgehäuseteil und einem in einer gemeinsamen Verbindungsebene korrespondierend ausgebildeten, ebenfalls separaten Vorsteuerventilgehäuseteil ausgebildet. Beide Gehäuseteile sind in diesem Falle über ein im Wesentlichen ringförmiges Dichtelement, das die innenliegende Steuerkammer umschließt, druckdicht und lösbar - beispielsweise über eine Verschraubung - aneinander befestigt. Das derart geteilte Ventilgehäuse ermöglicht eine einfache Montage der innenliegenden Ventilbauteile.

Bei dem so ausgebildeten Ventilgehäuse kann der Druckausgleichskanal austrittsseitig seitens des Relaisventilgehäuseteils angeordnet sein und über einen entsprechenden Durchbruch im Dichtelement innerhalb des Vorsteuerventilgehäuseteils zum Elektronikraum hin weitergeführt werden. Durch diesen Kanalverlauf wird die vorstehend beschriebene gewünschte Lage der Austrittsöffnung des Druckausgleichskanals erreicht, wobei die durch den geteilten Aufbau des Ventilgehäuses bestehenden baulichen Randbedingungen beachtet werden.

Weitere, die Erfindung verbessernde Maßnahmen sind in den Ansprüchen angegeben oder werden nachgestehend gemeinsam mit der Beschreibung eines bevorzugten Ausführungsbeispiels der Erfindung anhand der Figuren näher dargestellt. Es zeigt:
- Figur 1: einen Längsschnitt durch ein elektropneumatisches Regelventil,
- Figur 2: eine Draufsicht auf das Relaisventilgehäuseteil des Regelventils nach Figur 1,
- Figur 3: einen ausschnittsweisen Längsschnitt durch das Relaisventilgehäuseteil im Bereich der Austrittsöffnung des Druckausgleichskanals.

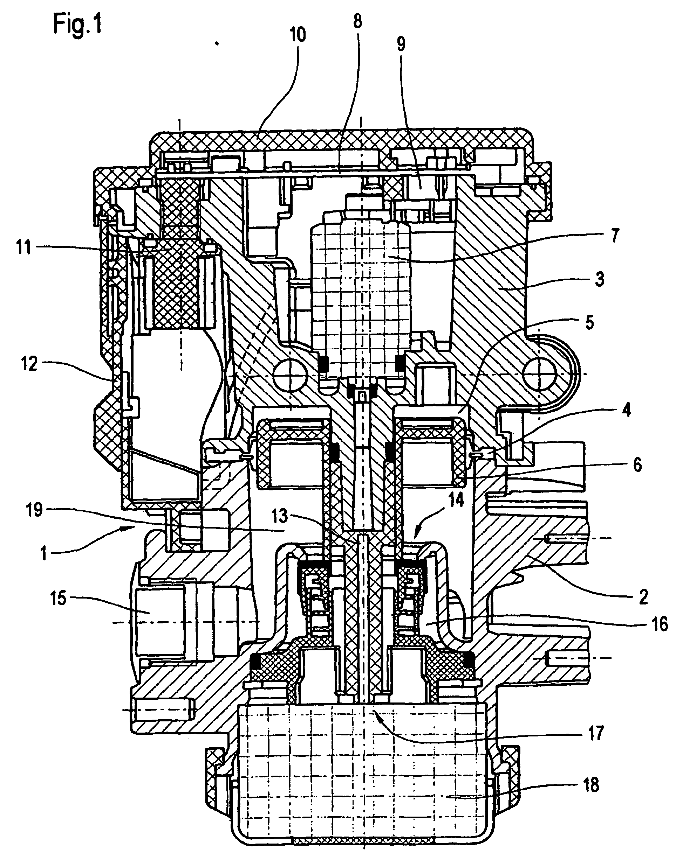

Gemäß Figur 1 weist ein als elektropneumatisches Regelventil spezifiziertes vorgesteuertes Ventil ein im Wesentlichen zweiteilig aufgebautes Ventilgehäuse 1 auf, das aus einem unteren Relaisventilgehäuseteil 2 besteht, welches mit einem oberen Vorsteuerventilgehäuseteil 3 über ein dazwischenliegendes, ringförmiges Dichtungselement 4 verbunden ist. Die Verbindung wird über eine (nicht weiter dargestellte) Verschraubung realisiert. Das Relaisventilgehäuseteil 2 schließt im Zusammenwirken mit dem Vorsteuerventilgehäuseteil 3 eine innenliegende Steuerkammer 5 ein, in der ein Steuerkolben 6 axial bewegbar angeordnet ist.

Zur Axialverstellung des Steuerkolbens 6 dient eine im Vorsteuerventilgehäuseteil 3 untergebrachte Vorsteuerventilanordnung, von der hier lediglich ein als Auslassmagnet dienendes Vorsteuerventil 7 gezeigt ist. Die Vorsteuerventilanordnung wird über eine Elektronikeinheit 8 elektrisch angesteuert, die in Form eines ventilinternen Hohlraums als Elektronikraum 9 ausgebildet ist. Der Elektronikraum 9 ist über einen Deckel 10 dichtend verschließbar. Die Elektronikeinheit 8 steht mit einer (hier nicht weiter dargestellten) zentralen Steuereinheit in Verbindung; die elektrische Verbindung wird über eine an der Elektronikeinheit 8 angebrachten Steckeranordnung 11 hergestellt. Die Steckeranordnung 11 liegt spritzwassergeschützt hinter einer Abdeckhaube 12; die am Ventilgehäuse 1 lösbar angebracht ist.

Das gezeigte Vorsteuerventil 7 dient als Auslassventil und entlüftet insoweit bei einer elektrischen Betätigung über die Elektronikeinheit 8 die Steuerkammer 5, wobei die Abluft über einen Entlüftungskanal 13 an die Atmosphäre abgeleitet wird. Daneben ist ein (hier nicht gezeigtes) zweites Vorsteuerventil als Einlassventil vorhanden, das eine Beaufschlagung der Steuerkammer 5 mit einem Steuerdruck dient, um den Steuerkolben 6 zu bewegen.

Bei einer Beaufschlagung der Steuerkammer 5 betätigt der Steuerkolben 6 über eine untere hülsenartige Anformung im Bereich seiner koaxialen gehäuseinternen Axialführung eine Ventilsitzanordnung 14. Hierüber ist der Druckluftfluss zwischen einem am Relaisventilgehäuseteil 2 angeordneten Bremsleitungsanschluss 15 einerseits sowie einem (hier nicht erkennbaren) Speisedruckanschluss, der gleichwohl mit einer internen Speisedruckkammer 16 in Verbindung steht, und einem Entlüftungsanschluss 17 andererseits schaltbar. Der Entlüftungsanschluss 17 ist zusätzlich mit einem Schalldämpfer 18 zur Geräuschminderung ausgestattet.

Das elektropneumatische Regelventil ist hier in seiner abgeschlossenen Schaltstellung gezeigt, wobei ein Druckluftfluss nicht stattfindet. Bei Beaufschlagung der Steuerkammer 5 mit einem Steuerdruck und darauffolgender Bewegung des Steuerkolbens 6 in Richtung einer unteren Schaltposition erfolgt durch Öffnen der Ventilsitzanordnung 14 ein Druckluftfluss, ausgehend von der Speisedruckkammer 16 zu einer unterhalb des Steuerkolbens 6 befindlichen Arbeitskammer 19 zum Bremsleitungsanschluss 15, um den Bremsdruck infolgedessen zu erhöhen.

Bei einer Entlüftung der Steuerkammer 5 wird der Steuerkolben 6 in eine obere Schaltposition überführt, wobei durch ein entgegengesetztes Öffnen der Ventilsitzanordnung 14 Druckluft ausgehend vom Bremsleitungsanschluss 15 über die Arbeitskammer 19 zum Entlüftungsanschluss 17 gelangt, um den Bremsdruck entsprechend abzusenken. Somit wird der Bremsdruck durch eine wechselseitige Bewegung des Steuerkolbens 6 entsprechend eines der Elektronikeinheit 8 vorgebbaren Druck-Sollwertes geregelt. Zur Entlüftung des drucklos zu haltenden Elektronikraums 9 ist ein in der gezeigten Schnittdarstellung nicht erkennbarer Druckausgleichskanal vorgesehen.

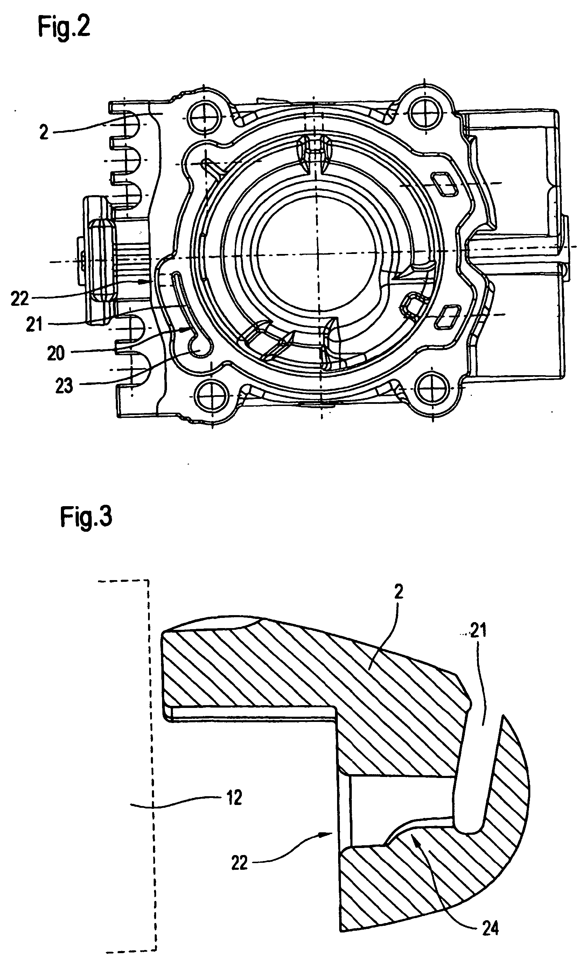

Unter Bezugnahme auf die Darstellung nach Figur 2 verläuft der Druckausgleichskanal 20 größtenteils innerhalb der Wandung des Relaisventilgehäuseteils 2. Abgewinkelt hiervon mündet der Druckausgleichskanal 20 zu einer Seite in eine in der Verbindungsebene zum benachbarten (hier nicht gezeigten) Vorsteuerventilgehäuseteil verlaufenden bogenförmigen Ausnehmung 21 über einen Querkanalabschnitt in eine Austrittsöffnung 22. Über eine zur anderen Seite der bogenförmigen Ausnehmung 21 angeordneten Grundbohrung 23 erfolgt der Übergang durch einen entsprechenden Durchbruch im (hier nicht weiter dargestellten) Dichtungselement hindurch in den Elektronikraum des Vorsteuerventilgehäuseteils.

Wie im Detail aus der Figur 3 hervorgeht, schließt sich an die Austrittsöffnung 22 des Druckausgleichskanals 20 ein Querkanalabschnitt 24 an, der in den Mittelbereich der Wandung des Relaisventilgehäuseteils 2 führt. Von dort aus schließt sich hiervon abgewinkelt in Richtung zum (hier nicht dargestellten) Elektronikraum des Vorsteuerventilgehäuseteils die Ausnehmung 21 an. Die Austrittsöffnung 22 ist über die Abdeckhaube 12 zusätzlich spritzwassergeschützt.

Die Erfindung ist nicht beschränkt auf das vorstehend angegebene bevorzugte Ausführungsbeispiel. Es sind vielmehr auch Abwandlungen hiervon denkbar, die von dem durch die nachfolgenden Ansprüche definierten Schutzbereich Gebrauch machen können. Insbesondere ist die vorliegende Erfindung nicht beschränkt auf ein vorgesteuertes Ventil mit einem nur zweiteilig aufgebauten Ventilgehäuse. Das Ventilgehäuse kann ebenso auch bei entsprechenden, dem Fachmann naheliegenden Anpassungen, einteilig oder mehr als zweiteilig aufgebaut sein. Darüber hinaus ist die vorliegende Erfindung auch bei einem Ventil einsetzbar, das als elektropneumatisches Doppelregelventil mit zwei innerhalb desselben Ventilgehäuses angeordneten Steuerkolben und je zugeordneten Ventilsitzanordnungen einsetzbar ist, wobei zumindest ein Druckausgleichskanal für einen eventuell gemeinsamen Elektronikraum vorzusehen ist.

### Bezugszeichenliste

- 1: Ventilgehäuse
- 2: Relaisventilgehäuseteil
- 3: Vorsteuerventilgehäuseteil
- 4: Dichtelement
- 5: Steuerkammer
- 6: Steuerkolben
- 7: Vorsteuerventil
- 8: Elektronikeinheit
- 9: Elektronikraum
- 10: Deckel
- 11: Steckeranordnung
- 12: Abdeckhaube
- 13: Entlüftungskanal
- 14: Ventilsitzanordnung
- 15: Bremsleitungsanschluss
- 16: Speisedruckanschluss
- 17: Entlüftungsanschluss
- 18: Schalldämpfer
- 19: Arbeitskammer
- 20: Druckausgleichskanal
- 21: Ausnehmung
- 22: Austrittsöffnung
- 23: Bohrung
- 24: Querkanalabschnitt

## Patentansprüche

1. Vorgesteuertes Ventil, insbesondere elektropneumatisches Regelventil für ein Druckluftbremssystem eines Fahrzeuges, mit einem geteilten Ventilgehäuse (1), in dem mindestens ein axial verstellbarer Steuerkolben (6) zur Betätigung einer den Druckluftfluss zwischen äußeren Anschlüssen (15 bis 17) schaltenden Ventilsitzanordnung angeordnet ist, wobei der Steuerkolben (6) über mindestens ein elektromagnetisches Vorsteuerventil (7) zur Axialverstellung beaufschlagbar ist, welches in einem mit dem Relaisventilgehäuseteil (2) verbundenen Vorsteuerventilgehäuseteil (3) untergebracht ist, **dadurch gekennzeichnet, dass** zur Entlüftung eines drucklosen ventilinternen Hohlraums ein im Bereich der Wandung der Steuerkammer (5) im Ventilgehäuse (1) eingebrachter mehrfach abgewinkelter Druckausgleichskanal (20) vorgesehen ist, dessen nach außen führende Austrittsöffnung (22) hinter einer beabstandeten Abdeckhaube (12) am Ventilgehäuse (1) spritzwassergeschützt angeordnet ist und dessen hohlraumnaher Kanalabschnitt mit einem austauschbaren Druckausgleichselement versehen ist.

2. Vorgesteuertes Ventil nach Anspruch 1,
**dadurch gekennzeichnet, dass** der drucklose ventilinterne Hohlraum ein Elektronikraum (9) ist, in dem eine Elektronikeinheit (8) zur Ansteuerung des mindestens einen Vorsteuerventils (7) untergebracht ist.

3. Vorgesteuertes Ventil nach Anspruch 2,
**dadurch gekennzeichnet, dass** die Abdeckhaube (12) auch zur Abdeckung einer elektrischen Steckeranordnung (11) zum Anschluss der Elektronikeinheit (8) dient.

4. Vorgesteuertes Ventil nach Anspruch 1,
**dadurch gekennzeichnet, dass** der Druckausgleichskanal (20) in das Ventilgehäuse (1) direkt eingegossen ist oder nachträglich gebohrt ist.

5. Vorgesteuertes Ventil nach einem der vorstehenden Ansprüche,
**dadurch gekennzeichnet, dass** das geteilte Ventilgehäuse (1) aus einem separaten Relaisventilgehäuseteil (2) und einem in einer gemeinsamen Verbindungsebene korrespondierend ausgebildeten, ebenfalls separaten Vorsteuerventilgehäuseteil (3) besteht, die über ein im wesentlichen ringförmiges Dichtelement (4) lösbar und druckdicht aneinander befestigt sind.

6. Vorgesteuertes Ventil nach Anspruch 5,
**dadurch gekennzeichnet, dass** der Druckausgleichskanal (20) austrittsseitig im Relaisventilgehäuseteil (2) angeordnet ist und über einen Durchbruch im Dichtelement (4) innerhalb des Vorsteuerventilgehäuseteils (3) zum Elektronikraum (9) weitergeführt ist.

7. Vorgesteuertes Ventil nach Anspruch 6,
**dadurch gekennzeichnet, dass** der Druckausgleichskanal (20) dergestalt mehrfach abgewinkelt ausgebildet ist, dass ein von der Austrittsöffnung (22) ausgehender Querkanalabschnitt (24) in den Mittelbereich der Wandung des Relaisventilgehäuseteils (2) führt und von dort aus in einen in Richtung zum Elektronikraum (9) verlaufende Bohrung (23) übergeht, die im Bereich des Dichtelements (4) in eine in der Verbindungsebene verlaufenden bogenförmigen Ausnehmung (21) einmündet, die über den Durchbruch im Dichtelement (4) in einen in Vorsteuerventilgehäuseteil (3) ausgebildeten und letztlich in den Elektronikraum (9) einmündenen Kanalabschnitt übergeht.

8. Vorgesteuertes Ventil nach Anspruch 5,
**dadurch gekennzeichnet, dass** das Druckausgleichselement nach Art einer Teflonpille ausgebildet ist, die direkt in den Durchbruch des Dichtelements (4) eingefügt ist.

9. Vorgesteuertes Ventil nach einem der vorstehenden Ansprüche,
**dadurch gekennzeichnet, dass** das Ventil als Doppelregelventil mit zwei innerhalb desselben Ventilgehäuses angeordneten Steuerkolben und je zugeordneten Ventilsitzanordnungen ausgebildet ist, wobei zumindest ein Druckausgleichskanal für einen gemeinsamen Elektronikraum vorgesehen ist.

## Claims

1. Piloted valve, in particular an electro-pneumatic regulating valve for a pneumatic vehicle brake system, comprising a split valve housing (1) in which at least one axially adjustable slide valve (6) for operating a valve seat means switching the flow of compressed air between exterior ports (15 to 17), wherein said slide valve (6) is adapted for being operated via at least one electromagnetic pilot valve (7) for axial displacement, which is accommodated in a pilot valve housing part connected to the relay valve housing part (2), **characterised in that** a pressure compensation passage (20) is provided for venting a pressureless cavity inside the valve, which passage is provided in the region of the wall of said control chamber (5) in said valve housing (1) and presents multiple bends and having a discharge opening (22) leading to the outside, which is disposed behind a spaced cover hood (12) on said valve housing (1) so as to be splash-proof, whilst that section of said passage which is close to said cavity is provided with an exchangeable pressure compensation element.

2. Piloted valve according to Claim 1,
**characterised in that** said pressureless cavity inside the valve is an electronics compartment (9) in which an electronic unit (8) is accommodated for controlling said at least one pilot valve (7).

3. Piloted valve according to Claim 1,
**characterised in that** said cover hood (12) also serves to cover an electrical plug means (11) for connection of said electronic unit (8).

4. Piloted valve according to Claim 1,
**characterised in that** said pressure compensation passage (20) is directly moulded into said valve housing (1) or is subsequently drilled.

5. Piloted valve according to any of the preceding Claims,
**characterised in that** said split valve housing (1) consists of a separate relay valve housing part (2) and an equally separate pilot valve housing part (3) that is formed in correspondence in a common connecting plane, which parts are fastened on each other via a substantially annular sealing element (4) for detachment and for being pressure-tight.

6. Piloted valve according to Claim 5,
**characterised in that** said pressure compensation passage (20) is disposed, on the discharge side, in said relay valve housing part (2) and is continued via an aperture in said sealing element (4) inside said pilot valve housing part (3) up to said electronics compartment (9).

7. Piloted valve according to Claim 6,
**characterised in that** said pressure compensation passage (20) presents such a multiply bent configuration that a transverse passage section (24) starting out from said discharge opening (22) leads into the central zone of the wall of said relay valve housing part (2) and passes from there over into a bore (23) extending towards said electronics compartment (9), which bore opens into an arcuate recess (21) extending in said connecting zone in the region of said sealing element (4), which recess passes via said aperture in said sealing element (4) into a passage section formed into said pilot valve housing part (3) and finally opening into said electronics compartment (9).

8. Piloted valve according to Claim 5,
**characterised in that** said pressure compensation element is configured in the manner of a Teflon pill that is directly inserted into said aperture in said sealing element (4).

9. Piloted valve according to any of the preceding Claims,
**characterised in that** said valve is configured as dual regulating valve including two slide valve disposed inside the same valve housing and respectively associated valve seat means, with at least one pressure compensation passage being provided for a common electronics compartment.

## Revendications

1. Soupape pilotée, en particulier une vanne de régulation électropneumatique pour un système des freins pneumatiques pour un véhicule, comprenant une cage de soupape en plusieurs parties (1), dans laquelle au moins un piston pilote ajustable en sens axial (6) pour la commande d'un moyen à siège de soupape, qui commute l'écoulement de l'air comprimée entre des raccords extérieurs (15 à 17), dans laquelle ledit piston pilote (6) est apte à être commandé via au moins une soupape pilote (7) électromagnétique pou son déplacement axial, qui est reçue dans une partie de cage de la soupape pilote, qui est reliée à partie de cage de soupape de relais (2), **caractérisée en ce qu'**un conduit de compensation de pression (20) est formé pour la purge d'une cavité sans pression à l'intérieur de la soupape, ce conduit étant disposé dans la zone de la paroi de ladite chambre de commande (5) dans ladite cage de soupape (1), en présentant des plies multiples et une ouverture de décharge (22) menant à l'extérieur, qui est disposé derrière un (12) écarté à ladite cage de soupape (1) d'une manière à être étanche aux jets d'eau, pendant que ce tronçon dudit conduit, qui est proche à ladite cavité, est muni d'un élément compensateur de pression échangeable.

2. Soupape pilotée selon la revendication 1,
**caractérisée en ce que** ladite cavité sans pression à l'intérieur de la soupape est un compartiment d'équipement électronique (9), dans lequel une unité électronique (8) est reçue pour la commande d'au moins une soupape pilote (7).

3. Soupape pilotée selon la revendication 1,
**caractérisée en ce que** ledit capot (12) sert aussi à recouvrir un moyen à connecteurs (11) pour le raccord de ladite unité électronique (8).

4. Soupape pilotée selon la revendication 1,
**caractérisée en ce que** ledit conduit de compensation de pression (20) est moulé directement dans ladite cage de soupape (1) ou est y formé par perçage ultérieur.

5. Soupape pilotée selon une quelconque des revendications précédentes,
**caractérisée en ce que** ladite cage de soupape en plusieurs parties (1) consiste d'une partie séparée de cage de soupape de relais (2) et d'une partie de cage de la soupape pilote (3), également séparée, qui est formée en correspondance dans un plan commun de connexion, auxdites parties étant fixées l'une à l'autre via un élément d'étanchéité essentiellement annulaire (4) de manière amovible et conservant la pression.

6. Soupape pilotée selon la revendication 5,
**caractérisée en ce que** ledit conduit de compensation de pression (20) est disposé, du côté de décharge, dans ladite partie de cage de soupape de relais (2) et s'étend plus loin via une communication dans ledit élément d'étanchéité (4) à l'intérieur de ladite partie de cage de la soupape pilote (3) jusqu'audit compartiment d'équipement électronique (9).

7. Soupape pilotée selon la revendication 6,
**caractérisée en ce que** ledit conduit de compensation de pression (20) présente une configuration à plusieurs plies d'une telle façon, qu'un tronçon de passage transversal (24), qui départ de ladite ouverture de décharge (22), mène dans la zone centrale de la paroi de ladite partie de cage de soupape de relais (2) et passe de là, en se transformant en un trou (23) s'étendant vers ledit compartiment d'équipement électronique (9), ce trou s'ouvrant dans un creux en arc (21) s'étendant dans ladite zone de connexion dans la région dudit élément d'étanchéité (4), ce creux se transformant via ladite communication dans ledit élément d'étanchéité (4) en un tronçon de passage, qui est formé dans ladite partie de cage de la soupape pilote (3), et s'ouvrant enfin dans ledit compartiment d'équipement électronique (9).

8. Soupape pilotée selon la revendication 5,
**caractérisée en ce que** ledit élément compensateur de pression est configuré de la façon d'une pilule en Téflon, qui est directement insérée dans ladite communication dans ledit élément d'étanchéité (4).

9. Soupape pilotée selon une quelconque des revendications précédentes,
**caractérisée en ce que** ladite soupape est configurée sous forme d'une soupape de régulation double, qui renferme deux pistons pilotes disposés à l'intérieur de la même cage de soupape et un moyen à siège de soupape respectif affecté, à au moins un conduit de compensation de pression étant formé pour un compartiment d'équipement électronique commun.
